# EUROPÄISCHE PATENTSCHRIFT

(11) **EP 2 519 569 B1**
(45) Veröffentlichungstag und Bekanntmachung des Hinweises auf die Patenterteilung: **22.01.2014**
(21) Anmeldenummer: 10803028.9
(22) Anmeldetag: 30.12.2010
(51) Int. Cl.: C08J 9/14, C08J 9/12

(54) **EXPANDIERBARE POLYMERISATE AUS CELLULOSEACETATBUTYRAT**
EXPANDABLE POLYMERS FROM CELLULOSE ACETOBUTYRATE
POLYMÈRES EXPANSIBLES D' ACÉTOBUTYRATE DE CELLULOSE

(30) Priorität: 30.12.2009 AT 20542009
(43) Veröffentlichungstag der Anmeldung: 07.11.2012
(73) Patentinhaber: Sunpor Kunststoff Gesellschaft m.b.H., 3105 St. Pölten (AT)
(72) Erfinder: EBERSTALLER, Roman, A-3200 Obergrafendorf (AT); HINTERMEIER, Gerhard, A-3100 St. Pölten (AT)
(74) Vertreter: Wildhack & Jellinek
(86) Internationale Anmeldenummer: PCT/AT2010/000497
(87) Internationale Veröffentlichungsnummer: WO 2011/079345

(56) Entgegenhaltungen:
- GB-A- 1 086 747
- DATABASE CAPLUS [Online] CHEMICAL ABSTRACTS SERVICE, COLUMBUS, OHIO, US; 7. Mai 2008 (2008-05-07), JACOBS, LEON J. M.: "Porous cellulose acetate butyrate foams with a tunable bimodality in foam morphology produced with supercritical carbon dioxide", XP002634692, gefunden im STN Database accession no. 2008:547173

## Beschreibung

Die Erfindung betrifft besondere expandierbare partikelförmige, zumindest ein Treibmittel enthalten Polymerisate bzw. Polymergranulate aus Celluloseacetatbutyrat sowie entsprechende Polymerschäume aus Celluloseacetatbutyrat.

Celluloseacetatbutyrat (CAB) ist ein Biopolymer, das auf Cellulose basiert. Es ist ein Ester der Cellulose mit aliphatischen Carbonsäuren. Während beispielsweise bei Celluloseacetat die Veresterung nur durch Essigsäure stattfindet, findet bei CAB eine Veresterung mit Essigsäure und Buttersäure statt,

Das Celluloseacetatbutyrat-Polymer kann allgemein durch die Formel 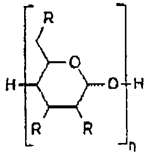 symbolisiert werden, worin jedes R im Polymer unabhängig aus der Gruppe von - OH (Hydroxyl), -OOCCH₃ (Acetat), und -OOCCH₂CH₂CH₃ (Butyrat) ausgewählt ist.

Celluloseacetatbutyrat hat eine im Vergleich zu Celluloseacetat und Cellulosepropionat relativ niedrige Dichte sowie eine hohe Festigkeit, Härte und Zähigkeit. Es ist formstabil im Temperaturbereich von - 45 °C bis 115 °C, besitzt eine hohe Temperatur- und UV-Beständigkeit und ist beständig gegen Feuchtigkeit und eine Vielzahl von Chemikalien und Umwelteinflüssen.

Als industriell gefertigter Kunststoff ist Celluloseacetatbutyrat seit 1946 im Handel. Celluloseacetatbutyrat wird für die Produktion vor allem als Granulat verwendet, das sowohl zum Extrudieren als auch zum Spritzgießen geeignet ist.

Das Anwendungsspektrum von Celluloseacetatbutyrat reicht von Griffbeschichtungen, z.B. Griffschalen der Schweizer Offiziersmesser, über Klarsichtkuppeln, Spielzeug, Kabelrohre, Beschichtungen und Lacke z.B. in der Automobil- und Fahrzeugindustrie, explosionssichere Scheiben, Fahrzeugleuchten, Automobilzubehör, Kontaktlinsen und Büromaschinen bis hin zu Folien und Verpackungsmaterial oder als Bestandteil von Nagellacken, Druckfarben. Bekannte Handelsnamen sind Cellidor®, Tenite® und Telex®.

Die Verwendung von Polymerschäumen auf Basis fossiler Rohstoffe, wie EPS (Expandierbares Polystyrol), für Verpackungen, Isolierungen und eine Reihe weiterer Anwendungen hat eine lange Tradition und ist gut etabliert. Versuche, die fossilen Rohstoffe durch nachwachsende Rohstoffe zu ersetzen, hatten in der Vergangenheit allerdings keinen Erfolg. Schlechtere mechanische und/oder chemische Eigenschaften standen einem breiten Einsatz entgegen. Eine biologische Abbaubarkeit hat für kurzlebige Konsumgüter zwar große Vorteile, für langlebige Güter, wie isolationsplatten, stellt dies allerdings ein Ausschlusskriterium dar.

Aus dem Stand der Technik sind verschiedene Anwendungen von Biopolymeren bekannt:

So beschreibt die US 6,221,924 ("Biodegradable cellulose acetate foam and process for its production") ein Verfahren zur Herstellung von Schäumen aus CelluloseAcetat mit guten mechanischen Eigenschaften. Die daraus hergestellten Formteile sind biologisch abbaubar.

Die WO 2008 130226 ("Particulate expandable polylactic acid, a method for producing the same, a foamed moulded product based on particulate expandable polylactic acid, as weil as a method for producing the same") beschreibt ein Verfahren zur Herstellung von Schäumen aus Polymilchsäure, die ebenfalls eine gute biologische Abbaubarkeit zeigen.

In der GB 1086747 wird ein Verfahren zum Aufschäumen von CAB durch Extrusion beschrieben.

Es ist aus mehreren Gründen wünschenswert, expandierbare Polymergranulate aus nachwachsenden Rohstoffen herzustellen.

Diese expandierbare Polymergranulate sollen zuverlässig und einfach zu geschäumten Schaumstoffformteilen verarbeitbar sind, die eine gute Verschweißung, eine gleichmäßige Zellstruktur mit mittleren Zellgrößen zwischen 20 und 500 µm und eine Dichte von 8 bis 250 kg/m³ aufweisen. Die Polymergranulate sollen jedoch keine biologische Abbaubarkeit nach EN 13432:2000 (Anforderungen an die Verwertung von Verpackungen durch Kompostierung und biologischen Abbau) zeigen.

Weiters sollten die expandierbaren Polymergranulate in Anlagen verarbeitbar sein, wie sie üblicherweise zur Verarbeitung von expandierbaren Partikelschaumstoffen, z.B. von EPS, verwendet werden, insbesondere handelsübliche Vorschäumer und Formteilautomaten bzw. Blockformen.

Ein weiters wichtiges Kriterium sind die Verarbeitungsparameter während der Vorschäumung, Zwischenlagerung und Versinterung, welche möglichst nahe an denen von EPS liegen sollten.

Weiters müssen die aus den beschriebenen Granulaten hergestellten Schaumstoffteile den Anforderungen an Formstabilität, z.B. Nachblähen, Schrumpfung, an Schneidbarkeit mit Heißdraht- und mechanischen Schneideanlagen gerecht werden.

Zwar ist es grundsätzlich theoretisch möglich Celluloseacetatbutyrat auch aufzuschäumen bzw. zu Partikelschäumen zu verarbeiten, doch existieren bislang keine funktionierenden, industrietauglichen Fertigungsprozesse mit denen ein stabiler, vorteilhafter Schaum erhalten werden könnte.

Es ist somit Aufgabe der vorliegenden Erfindung expandierbare Polymerisate bzw. Polymergranulate aus Celluloseacetatbutyrat bzw. einen daraus erhältlichen Schaumstoff zu schaffen, der die oben stehenden Vorteile aufweist und Kriterien erfüllt.

Diese Aufgabe wird durch die Merkmale des Anspruchs 1 gelöst.

Erfindungsgemäß ist vorgesehen, dass die expandierbaren partikelförmigen, zumindeste Treibmittel enthaltenden Polymerisate aus Celluloseacetatbutyrat mit einem Molekulargewichtszahlenmittel (Mn), bestimmt als Polystyrol-äquivalente Molekulargewichte mittels Gelchromatographie, von ≥ 20.000 g/mol sowie einem durchschnittlichen Butyryl-Gehalt von ≥ 20 Gew.-%., vorzugsweise ≥ 30 Gew%.-%, bestehen.

Es hat sich bei Versuchen überraschenderweise herausgestellt, dass die Einhaltung dieser Grenzwerte wesentlich ist, um zur Aufschäumung geeignete Granulate bzw. vorteilhafte Polymerschäume zu erhalten.

Aus diesem Grund ist n so gewählt, dass das Molekulargewicht-Zahlenmittel Mn des Celluloseacetatbutyrat-Polymers wenigstens etwa 20.000 g/mol beträgt. Das Molekulargewicht-Zahlenmittel Mn ist dabei bestimmt als Polystyrol-äquilavente Molekulargewichte mittels Gelpermeationschromatographie in THF mit Polystyrol als Standard.

Die Reste R im Polymer werden aus der Gruppe von -OH (d.h. Hydroxyl), - OOCCH₃ (d.h. Acetat), und -OOCCH₂CH₂CH₃ (d.h. Butyrat) so ausgewählt, dass der prozentuale Gewichtsanteil der Butyrylgruppen (d.h. -OCCH₂CH₂CH₃) am CAB größer oder gleich 20 Gew%.-%. vorzugsweise größer oder gleich 30 Gew.-%, beträgt. Die Bezugsgröße für die Angaben in Gew.-% ist hier das Celluloseacetatbutyrat als solches, also nicht das fertige Endprodukt bzw. das Gewicht der, gegebenenfalls mit Additiven versehenen, Polymerisate.

Damit konnten Celluloseacetethutyrat-Typen mit vorteilhaften und geeigneten Eigenschaften gefunden werden, die sich mit den üblichen Treibmitteln in einem industrietauglichen Prozess zu Polymergranulaten verarbeiten lassen und die Polymerschaumstoffteile mit den gewünschten Eigenschaften ergeben.

Auf diese Weise ergibt sich ein expandierbares Polymergranulat, das besonders gut und zuverlässig aufzuschäumen ist und einen formstabilen Schaum mit vorteilhafter Zellstruktur bzw. Zellgrößen ergibt. Der so erhaltene Schaum bzw. die Granulate sind außerdem gut verschweißbar.

Außerdem ist es durch die Einhaltung der erfindungsgemäßen Merkmale nunmehr möglich, die Granulate in den bestehenden üblichen Anlagen, beispielsweise Vorschäumern oder Formteilautomaten, zu verarbeiten, da die Materialeigenschaften mit den Eigenschaften von EPS vergleichbar sind.

Außerdem weist der aus diesen Granulaten erhältliche Polymerschaum hohe Formstabilität auf und ist leicht zu Blöcken oder Platten schneidbar.

Unter den Begriffen "expandierbare Polymerisate" bzw. "expandierbare Polymergranulate" sind expandierbare partikelförmige Teilchen bzw. CAB-Partikel von relativ geringer Größe zu verstehen, ähnlich handelsübliche EPS-Perlen. Solche Teilchen lassen sich unter Normalbedingungen lagern und transportieren und durch Wahl der Verarbeitungsparameter zu verschiedenen Dichten aufschäumen, die anschließend zu Formkörpern versintert werden. Diese Teilchen sind also durch Erhöhung der Temperatur leicht expandierbar. Es ist sowohl die Herstellung von offenzelligen als auch geschlossenzelligen Schäumen sowie alle Zwischenstufen möglich.

Vorteilhafte Ausgestaltungen bzw. Weiterentwicklungen der Erfindung sind durch die Merkmale der abhängigen Ansprüche definiert:

So erhält man besonders vorteilhafte Polymerisate bzw. Schäume, wenn vorgesehen ist, dass das Molekulargewichtszahlenmittel Mn ≥ 30.000 g/mol, insbesondere ≥ 40.000 g/mol, ist. Vorteilhafterweise liegt das Molekulargewichtszahlenmittel in einem Bereich von 30.000 bis 70.000 g/mol.

Ein möglicher Butyryl-Gehalt liegt vorteilhafterweise in einem Bereich zwischen 30 und 60 Gew.-%.

Weiters ist es vorteilhaft, wenn der prozentuale Gewichtsanteil der Hydroxylgruppen am Polymer etwa 0,5 bis etwa 2,5 Gew.-%, vorzugsweise etwa 0,8 bis etwa 1,8 Gew.-% am CAB, beträgt. Auch hier ist die Bezugsgröße für die Angaben in Gew.-% das Celluloseacetatbutyrat als solches, und nicht das Gewicht der Polymerisate.

Gemäß einer vorteilhaften Weiterentwicklung der Erfindung ist vorgesehen, dass das Polymer eine Glasübergangstemperatur Tg im Bereich von 90°C bis 140°C aufweist.

Um eine gute und einfache Aufschäumbarkeit zu gewährleisten ist, in den Teilchen selbst bzw. als Bestandteil des Teilchens zumindest ein Treibmittel enthalten, insbesondere Pentan, vorzugsweise in einer Konzentration von 3 bis 10 Gew.-%, bezogen auf das Gesamtgewicht des Polymers. Ein aufwändiges Imprägnieren mit überkritischem CO₂ unter Druck ist dadurch nicht erforderlich. Die CAB-Teilchen sind verarbeitungsfertig und können jederzeit ohne weiteres durch Erhöhung der Temperatur expandiert werden.

Um die notwendigen Brandschutznormen zu erfüllen, kann vorteilhafterweise zumindest ein Flammschutzmittel enthalten sein. Abhängig vom Einsatzzweck, der Flammschutzwirkung oder von Umweltaspekten, ist das Flammschutzmittel eine halogenierte organische Verbindung, beispielsweise eine Bromverbindung, vorzugsweise mit einem Halogengehalt von mindestens 50 Gew.-%.

Alternativ oder zusätzlich kann eine halogenierte oder nicht halogenierte organische Phosphorverbindung, beispielsweise 9,10-Dihydro-9-oxa-10-phosphaphenantren-10-oxid (DOP-O), 9,10-Dihydro-9-oxa-10-phosphaphenanthren-10-thion bzw. -10-sulfid (DOP-S), Triphenylphosphat (TPP) etc., zugegeben werden.

Vorteilhafte Mengen sind etwa 0,5 bis 25 Gew.-%, insbesondere 3 bis 15 Gew.-%, bezogen auf das Gesamtgewicht des Polymers. Gegebenenfalls kann eine Schwefelverbindung oder elementarer Schwefel als Synergist enthalten sein.

In diesem Zusammenhang ist es besonders vorteilhaft, wenn vorgesehen ist, dass als Flammschutzmittelsystem eine Kombination aus zumindest einer Phosphorverbindung als Flammschutzmittel und zumindest einer Schwefelverbindung als zusätzliches Flammschutzmittel bzw. -synergist enthalten ist. Hierbei ist die Phosphorverbindung elementarer Phosphor, insbesondere roter Phosphor, zumindest eine anorganische Phosphorverbindung oder Hydrolysate oder Salze davon und/oder zumindest eine organische Phosphorverbindung der folgenden allgemeinen Formel (I) oder (II) oder Hydrolysate oder Salze davon, 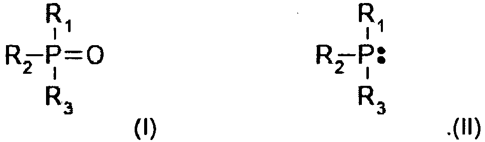 worin die Reste R₁, R₂ und R₃ jeweils unabhängig voneinander organische oder anorganische Reste bedeuten.

Die Schwefelverbindung ist elementarer Schwefel und/oder zumindest eine anorganische oder organische Schwefelverbindung bzw. schwefelhältige Verbindung ist.

Um eine verringerte Wärmeleitfähigkeit zu erhalten ist es vorteilhaft, wenn 1 bis 10 Gew.-%, bezogen auf das Gesamtgewicht des Polymers, von zumindest einem Infrarot-Trübungsmittel enthalten ist, vorzugsweise ausgewählt aus der Gruppe von Ruß, Metalloxide, Metallpulver und/oder Graphit.

Vorteilhafte Polymerisate sind dadurch gekennzeichnet, dass die einzeinen Granulate eine durchschnittliche Korngröße von 0,2 bis 5 mm aufweisen und/oder dass die Granulate im wesentlichen rund sind.

Um ein Zusammenkleben der Polymerisate zu verhindern kann vorgesehen sein, dass sie eine Coating-Schicht, insbesondere aus Glycerinstearaten, Metallstearaten, Silikaten etc., aufweisen.

Gemäß einer vorteilhaften Weiterentwicklung der Erfindung sind 0,05 bis 3 Gew.-% eines Nukleierungsmittels enthalten, bevorzugt ausgewählt aus der Gruppe von Polyolefinwachsen, Paraffinen, Fischer-Tropsch-Wachsen, den Estern und Amiden von Fettsäuren bzw. anorganischen Partikeln mit einer Korngröße zwischen 1 und 20 µm bzw. Kombinationen daraus.

In weiterer Folge wird ein vorteilhaftes Verfahren zur Herstellung der oben erwähnten Polymerisate vorgeschlagen, wobei unter Zugabe eines Treibmittel, die Granulierung der Partikeln mit Hilfe eines druckbeaufschlagten Unterwassergranulierers bei einem Druck größer 3 bar und einer Wassertemperatur zwischen 20 und 100°C erfolgt.

Weiters wird erfingdungsgemäß ein Polymerschaumstoff in Form eines Partikelschaumstoffs vorgeschlagen, der aus Celluloseacetatbutyrat gebildet ist und zwar mit einem Molekulargewichtszahlenmittel (Mn), bestimmt als Polystyrol-äquivalente Molekulargewichte mittels Gelchromatographie, von ≥ 20.000 g/mol, sowie einem durchschnittlichen Butyryl-Gehalt von ≥ 20 Gew,-%., vorzugsweise ≥ 30 Gew.-%.

Der Schaumstoff kann offenzelüg, geschlossenzellig oder gemischt sein.

Vorteilhaft sind Molekulargewichtszahlenmittel (Mn) von ≥ 30.000 g/mol, insbesondere ≥ 40.000 g/mol, vorzugsweise in einem Bereich zwischen 30.000 und 70.000 g/mol.

Ein möglicher vorteilhafter Butyryl-Gehalt liegt in einem Bereich zwischen 30 und 60 Gew.-%.

Dieser Schaumstoff weist die eingangs erwähnten Vorteile einer guten Formstabilität, einer leichten Verarbeitbarkeit, Schneidbarkeit etc. auf und wird vorteilhafterweise Insbesondere für Schaumstoffformtelle für Verpackungen, Isolationsmaterialien, technische Materialien, Schutzheime, Dämmplatten etc. eingesetzt.

Der Polymerschaumstoff kann entweder durch Extrusion hergestellt werden. Alternativ ist es vortellhafterweise auch möglich, den Polymerschaumfstoff in Form eines Partikelschaumstoffes auszubilden. Dabei werden die oben beschriebenen expandierbaren Polymerisate mittels üblicher Verfahren, insbesondere durch Aufschäumen und Versintern der Partikel, zum Schaum weiterverarbeitet.

In diesem Zusammenhang ist es vorteilhaft, wenn der Schaum eine gleichmäßige Zellstruktur mit mittleren Zellgrößen zwischen 20 und 500 µm aufweist.

Gemäß einer weiteren Ausgestaltung der Erfindung ist vorgesehen, dass der Schaum eine Dichte von 8 bis 250 kg/m³ aufweist.

Um den Einsatz von langlebigen Produkten, wie beispielsweise Dämmplatten zu ermöglichen ist es vorteilhaft, wenn vorgesehen ist, dass der Schaum biologisch nichtabbaubar gemäß EN 13432:2000 ist.

Eine besonders vorteilhafte Ausgestaltung des Polymerschaumstoffes sieht vor, dass Infrarottrübungsmittel enthaltende Partikel und Partikel ohne Infrarottrübungsmittel in regelmäßiger oder unregelmäßiger Verteilung miteinander versintert sind. Ein derartiger Schaumstoff besitzt eine geringe Wärmeleitfähigkeit, kombiniert mit einer hohen Formstabilität, insbesondere auch bei Sonneneinstrahlung.

Die Erfindung wird im folgenden anhand von einigen besonders vorteilhaften Beispielen dargestellt:

### Beispiele:

### Beispiel 1

Ein Celluloseacetatbutyrat (Kettenlänge Mn = 30.000 g/mol, Butyryl-Gehalt = 38 Gew.-%, 1,3 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 2

Ein Celluloseacetatbutyrat (Kettenlänge Mn = 30.000 g/mol, Butyryl-Gehalt = 55 Gew.-%, 1,8 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 3

Ein Celluloseacetatbutyrat (Kettenlänge Mn = 16.000 g/mol, Butyryl-Gehalt = 55 Gew.-%, 1,5 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 4

Ein Celluloseacetatbutyrat (Kettenlänge Mn = 67.000 g/mol, Butyryl-Gehalt = 38 Gew.-%, 0,8 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 5

Ein Celluloseacetatbutyrat (Kettenlänge Mn = 67.000 g/mol, Butyryl-Gehalt = 17 Gew.-%, 1,1 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 6

Ein Celluloseacetatbutyrat (Kettenlänge Mn = 20.000 g/mol, Butyryl-Gehalt = 55 Gew.-%, 1,6 Gew% Hydroxylgruppen) wurde in einem Doppelschneckenextruder aufgeschmolzen und der Schmelze 6 Gew.-% Pentan beigemischt. Die so enthaltene Polymerschmelze wurde mit einem Durchsatz von 20 kg/h durch eine Düsenplatte gefördert und mit einem druckbeaufschlagten Unterwassergranulierer zu kompakten Polymer-Granulaten granuliert.

### Beispiel 7

Beispiel 1 wurde wiederholt, mit dem Unterschied dass zusätzlich 0,25 Gew.-% Polywax 2000 (Fa. Baker Hughes) als Nukleierungsmittel zugegeben wurde.

### Beispiel 8

Beispiel 2 wurde wiederholt, mit dem Unterschied dass zusätzlich 0,25 Gew.-% Polywax 2000 (Fa. Baker Hughes) als Nukleierungsmittel zugegeben wurde.

### Beispiel 9

Beispiel 1 wurde wiederholt, mit dem Unterschied dass zusätzlich 2,5 Gew.-% Hexabromcyclododecan zugemischt wurden.

### Beispiel 10

Beispiel 2 wurde wiederholt, mit dem Unterschied dass zusätzlich 10 Gew.-% 9,10-Dihydro-9-oxa-10-phospha-phenanthren-10-oxid (DOPO) und 3 Gew% 2,2'-Dithiobis(benzothiazole) zudosiert wurden.

### Beispiel 11

Beispiel 1 wurde wiederholt, mit dem Unterschied dass zusätzlich 2 Gew.-% kristalliner Naturgrafit (d₉₀ < 12 µm) und 2,5% Hexabromcyclododecan zugemischt wurden.

### Beispiel 12

Beispiel 1 wurde wiederholt, mit dem Unterschied dass zusätzlich 2,5 Gew.-% Ruß (Evonik Printex L6) und 2,5% Hexabromcyclododecan zugemischt wurden.

Die Polymergranulate, die aus den Versuchen 1 bis 12 erhalten wurden, wurden mittels eins Druckvorschäumers (Kurtz X1.5) auf die kleinstmögliche Rohdichte vorgeschäumt. Nach einer Zwischenlagerzeit von 18 Stunden wurden in einem Formteilautomaten (Erlenbach C87/67/1) Platten von ca. 30 x 30 x 5 cm produziert.

### Ergebnisse:

| Ergebnisse aus den Beispielen | Mit einem Schäumgang minimal erreichbare Dichte [kg/m³] | durchschnittliche Zellgröße [µm] | B2 Kleinbrennertest nach DIN4102-2 |
|---|---|---|---|
| Beispiel 1 | 20 | 200 | nicht bestanden |
| Beispiel 2 | 19 | 200 | nicht bestanden |
| Beispiel 3 | --- (Kollaps) | --- | --- |
| Beispiel 4 | 19 | 200 | nicht bestanden |
| Beispiel 5 | --- (nicht expandierbar) | --- | --- |
| Beispiel 6 | 30 (nach Kollaps) | 250 | nicht bestanden |
| Beispiel 7 | 20 | 100 | nicht bestanden |
| Beispiel 8 | 18 | 90 | nicht bestanden |
| Beispiel 9 | 21 | 180 | bestanden |
| Beispiel 10 | 26 | 250 | bestanden |
| Beispiel 11 | 21 | 100 | bestanden |
| Beispiel 12 | 25 | 190 | bestanden |

Die Versuche 3 und 5, bei denen CAB-Typen mit einem Molekulargewicht von 65.000 g/mol, einem Butyrylgehalt von 17 Gew.-% bzw. einem Molekulargewicht von 16.000 g/mol, einem Butyrylgehalt von 55 Gew.-% verwendet wurden, konnten mit für die EPS Verarbeitung üblichen Maschinen nicht verarbeitet werden. Das Granulat aus Versuch 3 kollabierte unmittelbar nach der Bedampfung im Vorschäumer und konnte nicht weiterverarbeitet werden. Das Granulat aus Versuch 5 konnte trotz maximaler Bedampfung nicht auf eine Dichte unter 250 kg/m³ vorgeschäumt werden.

Die Granulate aus den Versuch 6 mit CAB mit einem Molekulargewicht von 20.000 g/mol und einem Butyrylgehalt von 55 Gew.-% konnten zu akzeptablen Rohdichten vorgeschäumt werden, obwohl das vorgeschäumte Granulat bei der Zwischenlagerung deutlich kollabierte.

Durch einen Vergleich der Beispiele 3, 6 und 2 - in dieser Reihenfolge - hierbei wurden Polymerisate jeweils mit einem Butyrylgehalt von 55 Gew.-% und ansteigenden Kettenlängen miteinander verglichen - ergibt sich, dass bei einer Kettenlänge von 16.000 g/mol kein aufschäumbares Granulat erhalten werden konnte und bei 30.000 g/mol ein zufriedenstellendes Ergebnis erzielt wurde. Bei einer Kettenlänge von 20.000 g/mol (Beispiel 6) konnte gerade noch zu einer akzeptablen Rohdichte vorgeschäumt werden, weshalb der untere Grenzwert auf diesen Wert festgesetzt wurde.

Bei den beiden Beispielen 4 und 5 wurden Polymerisate mit identischen Kettenlängen und unterschiedlichen Butyrylgehalten miteinander verglichen. Es zeigte sich, dass Granulate mit 17 Gew.-% Butyrylgehalt zu keiner akzeptablen Rohdichte vorgeschäumt werden konnten, wohingegen das Polymerisat mit 38 Gew.-% Butyrylgehalt zu einem guten Ergebnis führte. Als untere Grenzwerte wurden somit die Butyrylgehalte von 20 bzw. 30 Gew.-% festgelegt.

Die Polymerisate der Beispiele 7 und 8 ergaben Schäume mit einer geringeren durchschnittlichen Zellgröße zwischen 90 und 100 µm.

Bei den Beispielen 9 bis 12 wurden verschiedene Flammschutzmittel zugegeben. Die Granulate aus den Versuchen 9, 11 und 12 mit einem Gehalt von 2,5 Gew.-% HBCD und aus Versuch 10 mit 10 Gew.-% DOPO und 3 Gew.-% 2,2'-Dithiobis(benzothiazole) erfüllten die Kriterien des B2 Kleinbrennertests nach DIN 4102-2. Es zeigte sich, dass trotz der Flammschutzmittel zufriedenstellende Resultate bzw. stabile Schäume erhalten wurden.

## Patentansprüche

1. Expandierbare *partikelförmige, zumindest ein Treibmittel enthaltende,* Polymerisate bzw. Polymergranulate aus Celluloseacetatbutyrat (CAB) mit einem Molekulargewichtszahlenmittel (Mn), bestimmt als Polystyrol-äquivalente Molekulargewichte mittels Gelchromatographie, von ≥ 20.000 g/mol sowie einem durchschnittlichen Butyryl-Gehalt am Celluloseacetatbutyrat von ≥ 20 Gew.-%, vorzugsweise ≥ 30 Gew.-%.

2. Expandierbare Polymerisate nach Anspruch 1, **dadurch gekennzeichnet, dass** das Molekulargewichtszahlenmittel (Mn) ≥ 30.000 g/mol, insbesondere ≥ 40.000 g/mol, ist und/oder in einem Bereich von 30.000 bis 70.000 g/mol liegt und/oder dass der durchschnittliche Butyryl-Gehalt zwischen 30 und 60 Gew.-% liegt.

3. Expandierbare Polymerisate nach Anspruch 1 oder 2, **dadurch gekennzeichnet, dass** der prozentuale Gewichtsanteil der Hydroxylgruppen am Celluloseacetatbutyrat etwa 0,5 bis etwa 2,5 Gew.-%, vorzugsweise etwa 0,8 bis etwa 1,8 Gew.-%, beträgt.

4. Expandierbare Polymerisate nach einem der Ansprüche 1 bis 3, **dadurch gekennzeichnet, dass** das Polymer eine Glasübergangstemperatur Tg im Bereich von 90°C bis 140°C aufweist.

5. Expandierbare Polymerisate nach einem der Ansprüche 1 bis 4, **dadurch gekennzeichnet, dass** das/die Treibmittel, insbesondere Pentan, in einer Konzentration von 3 bis 10 Gew.-%, bezogen auf das Gesamtgewicht des Polymers, *enthalten ist.*

6. Expandierbare Polymerisate nach einem der Ansprüche 1 bis 5, **dadurch gekennzeichnet, dass** zumindest ein Flammschutzmittel enthalten ist, insbesondere eine halogenierte organische Verbindung, beispielsweise eine Bromverbindung, vorzugsweise mit einem Halogengehalt von mindestens 50 Gew.-%, und/oder eine halogenierte oder nicht halogenierte organische Phosphorverbindung, beispielsweise 9,10-Dihydro-9-oxa-10-phospha-phenantren-10-oxid (DOP-O), 9,10-Dihydro-9-oxa-10-phosphaphenanthren-10-thion bzw. -10-sulfid (DOP-S), Triphenylphosphat (TPP), insbesondere in einer Menge von 0,5 bis 25 Gew.-%, insbesondere 3 bis 15 Gew.-%, sowie gegebenenfalls eine Schwefelverbindung oder elementarer Schwefel als Synergist.

7. Expandierbare Polymerisate nach Anspruch 6, **dadurch gekennzeichnet, dass** als Flammschutzmittelsystem eine Kombination aus zumindest einer Phosphorverbindung als Flammschutzmittel und zumindest einer Schwefelverbindung als zusätzliches Flammschutzmittel bzw. -synergist enthalten ist, wobei
a) die Phosphorverbindung
- elementarer Phosphor, insbesondere roter Phosphor,
- zumindest eine anorganische Phosphorverbindung oder Hydrolysate oder Salze davon und/oder
- zumindest eine organische Phosphorverbindung der folgenden allgemeinen Formel (I) oder (II) oder Hydrolysate oder Salze davon, ist 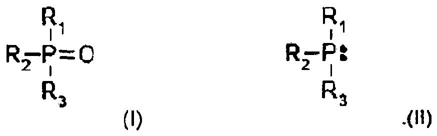
worin die Reste R₁, R₂ und R₃ jeweils unabhängig voneinander organische oder anorganische Reste bedeuten,
und dass
b) die Schwefelverbindung
- elementarer Schwefel und/oder
- zumindest eine anorganische oder organische Schwefelverbindung bzw. schwefelhältige Verbindung ist.

8. Expandierbare Polymerisate nach einem der Ansprüche 1 bis 7, **dadurch gekennzeichnet, dass** 1 bis 10 Gew.-%, bezogen auf das Gesamtgewicht des Polymers, von zumindest einem Infrarot-Trübungsmittel enthalten ist, vorzugsweise ausgewählt aus der Gruppe von Ruß, Metalloxide, Metallpulver und/oder Graphit.

9. Expandierbare Polymerisate nach einem der Ansprüche 1 bis 8, **dadurch gekennzeichnet, dass** die einzelnen Granulate eine durchschnittliche Korngröße von 0,2 bis 5 mm aufweisen und/oder dass die Granulate im wesentlichen rund sind.

10. Expandierbare Polymerisate nach einem der Ansprüche 1 bis 9, **dadurch gekennzeichnet, dass** sie eine Coating-Schicht, insbesondere aus Glycerinstearaten, Metallstearaten, Silikaten, aufweisen.

11. Expandierbare Polymerisate nach einem der Ansprüche 1 bis 10, **dadurch gekennzeichnet, dass** diese 0,05 bis 3 Gew.-% eines Nukleierungsmlttels enthalten, bevorzugt ausgewählt aus der Gruppe von Polyolefinwachsen, Paraffinen, Fischer-Tropsch-Wachsen, den Estern und Amiden von Fettsäuren bzw. anorganischen Partikeln mit einer Korngröße zwischen 1 und 20 µm bzw. Kombinationen daraus.

12. Verfahren zur Herstellung von expandierbaren Polymerisaten aus Celluloseacetatbutyrat gemäß einem der Ansprüche 1 bis 11, unter Zugabe eines Treibmitlels, wobei die Granulierung der Partikel mit Hilfe eines druckbeaufschlagten Unterwassergranulierers bei einem Druck größer 3 bar und einer Wassertemper-atur zwischen 20 und 100°C erfolgt.

13. Polymerschaumstoff *in Form eines Partikelschaumstoffs,* insbesondere Schaumstoffformteile für Verpackungen, Isolationsmaterialien, technische Materialien, Schutzhelme, Dämmplatten, gebildet aus Celluloseacetatbutyrat mit einem Molekulargewichtszahlenmittel (Mn), bestimmt als Polystyrol-äquivalente Molekulargewichte mittels Gelchromatographie, von ≥ 20.000 g/mol, vorzugsweise ≥ 30.000 g/mol, insbesondere ≥ 40.000 g/mol, vorzugsweise in einem Bereich zwischen 30.000 und 70.000 g/mol, sowie einem durchschnittlichen Butyryl-Gehalt am Celluloseacetatbutyrat von ≥ 20 Gew.-%., vorzugsweise ≥ 30 Gew.-%, gegebenenfalls zwischen 30 und 60 Gew.-%.

14. Polymerschaumstoff in Form eines Partikeischaumstoffs, erhältlich aus den expandierbaren Polymerisaten gemäß einem der Ansprüche 1 bis 12, insbesondere durch Aufschäumen und Versintern der Polymerisate.

15. Polymerschaumstoff nach Anspruch 13 oder 14, **dadurch gekennzeichnet, dass** er eine gleichmäßige Zellstruktur mit mittleren Zellgrößen zwischen 20 und 500 µm aufweist.

16. Polymerschaumstoff nach einem der Ansprüche 13 bis 15, **dadurch gekennzeichnet, dass** er eine Dichte von 8 bis 250 kg/m³ aufweist.

17. Polymerschaumstoff nach einem der Ansprüche 13 bis 16, **dadurch gekennzeichnet, dass** er biologisch nicht-abbaubar gemäß EN 13432:2000 ist.

18. Polymerschaumstoff nach einem der Ansprüche 13 bis 17, in Form eines Partikelschaumstoffs, erhältlich aus den expandierbaren Polymerisaten gemäß einem der Ansprüche 1 bis 12, **dadurch gekennzeichnet, dass** Infrarottrübungsmittel enthaltende Partikel und Partikel ohne Infrarottrübungsmittel in regelmäßiger oder unregelmäßiger Verteilung miteinander versintert sind.

## Claims

1. Expandable polymerizates or polymer granulates containing at least one blowing agent and being made of cellulose acetate butyrate (CAB) having a number average molecular weight (Mn), as determined as polystyrene-equivalent molecular weights by means of gel chromatography, of ≥ 20,000 g/mol and an average butyryl content of ≥ 20 wt%, preferably ≥ 30 wt%.

2. Expandable polymerizates according to claim 1, **characterized in that** the number average molecular weight (Mn) of ≥ 30,000 g/mol, in particular ≥ 40,000 g/mol, is in the range of 30,000 to 70,000 g/mol and/or that the average butyryl content is between 30 and 60 wt%.

3. Expandable polymerizates according to claim 1 or 2, **characterized in that** the weight percentage of the hydroxyl groups on the cellulose acetate butyrate is approximately 0.5 to approximately 2.5 wt%, preferably approximately 0.8 to approximately 1.8 wt%.

4. Expandable polymerizates according to any one of claims 1 to 3, **characterized in that** the polymer has a glass temperature Tg in the range of 90 °C to 140 °C.

5. Expandable polymerizates according to any one of claims 1 to 4, **characterized in that** the blowing agent(s), in particular pentane, is/are contained in a concentration of 3 to 10 wt%, based on the total weight of the polymer.

6. Expandable polymerizates according to any one of claims 1 to 5, **characterized in that** they contain at least one flame retardant, in particular a halogenated organic compound, for example a bromine compound, preferably one having a halogen content of at least 50 wt%, and/or a halogenated or non-halogenated organic phosphorus compound, e.g. 9,10-dihydro-9-oxa-10-phosphaphenanthrene-10-oxide (DOP-O), 9,10-dihydro-9-oxa-10-phosphaphenanthrene-10-thione or -10-sulfide (DOP-S), triphenyl phosphate (TTP) etc., particularly in an amount of 0.5 to 25 wt%, most preferably 3 to 15 wt%, as well as optionally a sulfur compound or elemental sulfur as a synergist.

7. Expandable polymerizates according to claim 6, **characterized in that** a combination of at least one phosphorus compound as a flame retardant and at least one sulfur compound as an additional flame retardant oder synergist is contained as a flame retardant system, wherein:
a) the phosphorus compound is
- elemental phosphor, particularly red phosphorus,
- at least one inorganic phosphorus compound, or hydrolyzates or salts thereof, and/or
- at least one organic phosphorus compound of the following general formula (I) or (II), or hydrolyzates or salts thereof, 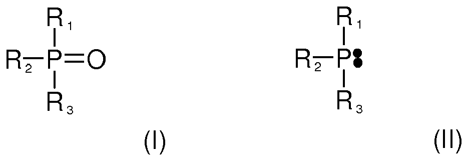 wherein the residues R₁, R₂ and R₃ independently represent organic or inorganic residues,
and wherein
b) the sulfur compound is
- elemental sulfur and/or
- at least one inorganic or organic sulfur compound or sulfur-containing compound.

8. Expandable polymerizates according to any one of claims 1 to 7, **characterized in that** 1 to 10 wt%, based on the total weight of the polymer, of at least one infrared opacifier are contained, preferably selected from the group consisting of carbon black, metal oxides, metal powders, and/or graphite.

9. Expandable polymerizates according to any one of claims 1 to 8, **characterized in that** the individual grains have an average grain size of 0.2 to 5 mm and/or that the granulates are essentially spherical.

10. Expandable polymerizates according to any one of claims 1 to 9, **characterized in that** they have a coating layer, in particular one consisting of glycerol stearates, metal stearates, silicates, etc.

11. Expandable polymerizates according to any one of claims 1 to 10, **characterized in that** they contain 0.05 to 3 wt% of a nucleation agent, preferably one selected from the group consisting of polyolefine waxes, paraffins, Fischer-Tropsch waxes, esters and amides of fatty acids, or inorganic particles having a grain size between 1 and 20 µm, or combinations thereof.

12. A method for producing expandable polymerizates of cellulose acetate butyrate according to any one of claims 1 to 11 with the addition of a blowing agent, wherein granulation of the particles is achieved by means of a pressurized underwater granulator at a pressure above 3 bar and a water temperature between 20 and 100 ° C.

13. A polymeric foam in the form of a particle foam, in particular foam parts for packaging, insulating materials, technical materials, safety helmets, insulating boards, etc., made of cellulose acetate butyrate having a number average molecular weight (Mn), determined as polystyrene-equivalent molecular weights by means of gel chromatography, of ≥ 20,000 g/mol, preferably ≥ 30,000 g/mol, most preferably ≥ 40,000 g/mol, preferably in a range between 30,000 and 70,000 g/mol, as well as an average butyryl content on the cellulose acetate butyrate of ≥ 20 wt%, preferably ≥ 30 wt%, optionally between 30 and 60 wt%, optionally obtained by extrusion.

14. A polymeric foam in the form of a particle foam obtainable from expandable polymerizates according to any one of the claims 1 to 12, especially by foaming and sintering the polymerizates.

15. A polymeric foam according to claim 13 or 14, **characterized in that** it has a uniform cell structure with average cell sizes between 20 and 500 µm.

16. A polymeric foam according to any one of claims 13 to 15, **characterized in that** it has a density of 8 to 250 kg/m³.

17. A polymeric foam according to any one of claims 13 to 16, **characterized in that** it is biologically non-degradable according to EN 13432:2000.

18. A polymeric foam according to any one of claims 13 to 17 in the form of a particle foam obtainable from the expandable polymerizates according to any one of claims 1 to 12, **characterized in that** particles containing an infrared opacifier and particles without infrared opacifier are sintered together in a regular or irregular distribution.

## Revendications

1. Polymères expansibles particulaires, qui contiennent au moins un agent moussant, et granulés polymères du butyrate d'acétate de cellulose (CAB) avec un poids moléculaire moyen en nombre (Mn), déterminé par une chromatographie sur gel comme poids moléculaires en équivalents polystyrène, de ≥ 20.000 g/mol et un contenu moyen de butyryle de ≥ 20 % en poids, de préférence de ≥ 30 % en poids.

2. Polymères expansibles selon la revendication 1, **caractérisés en ce que** le poids moléculaire moyen en nombre (Mn) s'élève à ≥ 40.000 g/mol, et/ou va de 30.000 à 70.000 g/mol et/ou **en ce que** le contenu moyen de butyryle varie entre 30 et 60 % en poids.

3. Polymères expansibles selon la revendication 1 ou la revendication 2, **caractérisés en ce que** le pourcentage en poids des groupes hydroxyle du butyrate d'acétate de cellulose va d'environ 0,5 à environ 2,5 % en poids, de préférence d'environ 0,8 à environ 1,8 % en poids.

4. Polymères expansibles selon l'une des revendications 1 à 3, **caractérisés en ce que** la température de transition vitreuse Tg du polymère va de 90 °C à 140 °C.

5. Polymères expansibles selon l'une des revendications 1 à 4, **caractérisés en ce qu'**ils contiennent au moins un agent moussant, notamment du pentane, à une concentration de 3 à 10 % en poids, par rapport au poids total du polymère.

6. Polymères expansibles selon l'une des revendications 1 à 5, **caractérisés en ce qu'**ils contiennent au moins un retardateur, notamment un composé organique halogéné, comme un composé de brome, par exemple, de préférence avec un contenu d'halogène d'au moins 50 % en poids, et/ou un composé organique de phosphore, halogéné ou non, comme par exemple le 9,10-dihydro-9-oxa-10-phosphaphénanthrène-10-oxyde (DOP-O), le 9,10-dihydro-9-oxa-10-phosphaphénanthrène-10-thione ou -10-sulfure (DOP-S), le triphénylphosphate (TPP), notamment en une quantité de 0,5 à 25 % en poids, notamment de 3 à 15 % en poids, ainsi que, selon le cas, un composé de sulfure ou du sulfure élémentaire comme synergiste.

7. Polymères expansibles selon la revendication 6, **caractérisés en ce qu'**ils contiennent une combinaison d'au moins un composé de phosphore comme retardateur et d'au moins un composé de sulfure comme retardateur additionnel ou synergiste comme système retardateur, dans lequel:
a) le composé de phosphore est
- du phosphore élémentaire, notamment du phosphore rouge,
- au moins un composé organique de phosphore ou ses hydrolysés ou sels et/ou
- au moins un composé organique de phosphore d'une des formules générales suivantes (I) ou (II) ou ses hydrolysés ou sels: 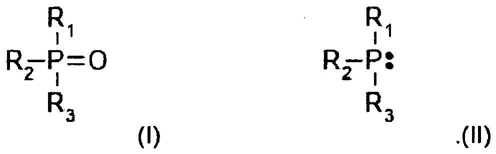 dans lesquelles chacun des radicaux R₁, R₂ et R₃ indépendamment est un radical organique ou anorganique;
et **en ce que**
b) le composé de sulfure est
- du sulfure élémentaire et/ou
- au moins un composé anorganique ou organique de sulfure ou un composé sulfurique.

8. Polymères expansibles selon l'une des revendications 1 à 7, **caractérisés en ce qu'**ils contiennent 1 à 10 % en poids, par rapport au poids total du polymère, d'au moins un agent opacifiant le rayonnement infrarouge, de préférence choisi du groupe comprenant le noir de carbone, les oxydes métallique, les poudres métalliques et/ou le graphite.

9. Polymères expansibles selon l'une des revendications 1 à 8, **caractérisés en ce que** les granulés individuels ont une grosseur de grain moyenne allant de 0,2 à 5 mm et/ou **en ce que** les granulés sont sensiblement sphériques.

10. Polymères expansibles selon l'une des revendications 1 à 9, **caractérisés en ce qu'**ils ont une couche de revêtement, notamment de stéarates de glycérine, de stéarates métalliques ou de silicates.

11. Polymères expansibles selon l'une des revendications 1 à 10, **caractérisés en ce qu'**ils contiennent de 0,05 à 3 % en poids d'un agent nucléant, de préférence choisi du groupe qui inclut les cires polyoléfinique, les paraffines, les cires de Fischer-Tropsch, les esters et amides des acides gras et des particules anorganiques d'une grosseur de grain variant entre 1 et 20 µm et les combinaisons des éléments précités.

12. Procédé pour la production de polymères du butyrate d'acétate de cellulose selon l'une des revendications 1 à 11, la granulation des particules étant effectuée à une pression de plus de 3 bar et à une température d'eau entre 20 °C et 100 °C en ajoutant un agent moussant dans un granulateur submergé pressurisé.

13. Mousse polymère en forme d'une mousse particulaire, notamment pièces usinées de mousse pour des emballages, des matières isolantes, des matières techniques, des casques de protection, des panneaux isolants, formée/s du butyrate d'acétate de cellulose et avec un poids moléculaire moyen en nombre (Mn), déterminé par une chromatographie sur gel comme poids moléculaires en équivalents polystyrène, de ≥ 20.000 g/mol, de préférence de ≥ 30.000 g/mol, notamment de ≥ 40.000 g/mol, de préférence de 30.000 à 70.000 g/mol, et un contenu moyen de butyryle dans le butyrate d'acétate de cellulose de ≥ 20 % en poids, de préférence de ≥ 30 % en poids, selon le cas d'entre 30 et 60 % en poids.

14. Mousse polymère en forme d'une mousse particulaire, qui peut être obtenue des polymères expansibles selon l'une des revendications 1 à 12, notamment par le moussage ou frittage desdits polymères.

15. Mousse polymère selon la revendication 13 ou la revendication 14, **caractérisée en ce que** la structure des alvéoles est uniforme, avec la taille moyenne des alvéoles variant entre 20 et 500 µm.

16. Mousse polymère selon l'une des revendications 13 à 15, **caractérisée en ce qu'**elle a une densité de 8 à 250 kg/m³.

17. Mousse polymère selon l'une des revendications 13 à 16, **caractérisée en ce qu'**elle n'est pas biodégradable selon EN 13432:2000.

18. Mousse polymère selon l'une des revendications 13 à 17, en forme d'une mousse particulaire, qui peut être obtenue des polymères expansibles selon l'une des revendications 1 à 12, **caractérisée en ce que** des particules contenant des agents opacifiant le rayonnement infrarouge et des particules sans lesdits agents opacifiant le rayonnement infrarouge sont agglomérées par frittage de manière qu'elles sont distribuées régulièrement ou irrégulièrement.
